# EUROPEAN PATENT APPLICATION

(11) **EP 4 832 175 A1**
(43) Date of publication of application: **28.10.2026**
(21) Application number: 26174208.4
(22) Date of filing: 23.04.2026
(51) Int. Cl.: H01M 10/6557, H01M 10/647, H01M 10/6568

(54) **IMMERSION COOLING MODULE**

(30) Priority: 25.04.2025 KR 20250054864
(71) Applicant: SK Innovation Co., Ltd., Seoul 03188 (KR); SK On Co., Ltd., Seoul 03161 (KR)
(72) Inventor: KIM, Se Hyeon, 34124 Daejeon (KR)
(74) Representative: Prüfer & Partner mbB Patentanwälte · Rechtsanwälte

(57) **Abstract**

Proposed is an immersion cooling module, which includes battery cells (10) stacked on opposite surfaces thereof, and one or more cooling passages (P) formed in a longitudinal direction of the battery cells (10), and a cooling plate (20) in which flow holes (S) communicating with the cooling passages (P) are formed on coupling surfaces relative to the battery cells (10) to allow cooling fluid flowing through the cooling passages (P) to flow in direct contact with the battery cells (10). Also proposed is a method for cooling a plurality of stacked battery cells.

## Description

### BACKGROUND OF THE INVENTION

### Field of the Invention

The present disclosure relates to an immersion cooling module. The present disclosure also relates to a method for cooling a plurality of stacked battery cells.

### Description of the Related Art

Recently, demand for not only the miniaturization and weight reduction of mobile information terminals such as mobile phones and laptops, but also for higher energy capacity in electric and hybrid vehicles, has led to the development and use of various batteries as power sources.

The efficiency of secondary batteries is becoming increasingly important depending on their application fields, but issues related to various external factors, such as heat generation and fires during charging or operation may occur.

Accordingly, various techniques are being developed to enhance the operational efficiency of secondary batteries and ensure the safety. Furthermore, due to increased carbon emissions and global warming from recent growth in electricity consumption, there is a demand for more efficient mechanisms for operating devices and for improvement in cooling methods and maximized efficiency.

### Documents of Related Art

### Patent Document

(Patent Document 1) KR 10-2560884 B1

### SUMMARY OF THE INVENTION

According to an aspect of the present disclosure, an objective of the present disclosure is to provide an immersion cooling module capable of increasing the cooling efficiency of a battery cell by directly cooling the battery cell as a cooling passage of a cooling plate formed on a stacking surface of the battery cell communicates with a surface of the battery cell.

Another objective of the present disclosure is to provide an immersion cooling module, which is capable of maximizing the cooling efficiency of a cooling plate by variously designing a cooling passage formed on the cooling plate formed on a stacking surface of a battery cell, and increasing the structural durability and reliability of the module to which the battery cell is coupled.

According to a first embodiment of the present disclosure, there is provided an immersion cooling module comprising battery cells stacked on opposite surfaces thereof; one or more cooling passages formed in a longitudinal direction of the battery cells; and a cooling plate in which flow holes communicating with the cooling passages are formed on coupling surfaces contacting the battery cells to allow cooling fluid flowing through the cooling passages to flow while in direct contact with the battery cells.

At this point, the flow holes of the cooling plate may be formed to extend in a longitudinal direction of the cooling passages and to communicate with the cooling passages.

Furthermore, the flow holes of the cooling plate may be formed to extend in a direction crossing the cooling passages and to communicate with the cooling passages.

According to a second embodiment of the present disclosure, the cooling passages of the cooling plate may include: a first cooling passage coming into contact with the battery cell coupled to a first surface of the cooling plate; and a second cooling passage physically separated from the first cooling passage by a vertical partition wall and coming into contact with the battery cell coupled to a second surface of the cooling plate. Here, the battery cell coupled to the first surface of the cooling plate may be adjacent to the battery cell which is coupled to the second surface of the cooling plate.

Herein, the first cooling passage and the second cooling passage may be partitioned into a plurality of first cooling passages and a plurality of second cooling passages by horizontal partition walls crossing the vertical partition wall.

Furthermore, the horizontal partition walls may be formed to be spaced from each other at predetermined intervals in a longitudinal direction of the vertical partition wall, and opposite ends of each horizontal partition wall may be coupled into directly contact with the battery cell at the first surface and the (adjacent) battery cell at the second surface.

Furthermore, each of the horizontal partition walls may include flanges at both ends, each flange coming into contact with a surface of each battery cell.

According to a third embodiment of the present disclosure, an immersion cooling module includes: battery cells stacked on opposite surfaces thereof; a cooling plate provided between the opposite battery cells and including a fluid partition wall having a zigzag shape bent in a first direction and a second direction at predetermined intervals, and forming a cooling passage between the bent portions in the first direction and the second direction.

Herein, the fluid partition wall of the cooling plate may include: a first frame and a second frame coupled to opposite portions thereof, wherein the first frame and the second frame may be coupled to a first portion and a second portion of the zigzag shape of the fluid partition wall, and may be open at the first portion and the second portion to communicate with a cooling passage formed by the fluid partition wall.

According to a fourth embodiment of the present disclosure, an immersion cooling module may include: battery cells stacked on opposite surfaces; and a cooling plate provided between the opposite battery cells and including a bent wall that is bent perpendicularly alternately in a first direction and a second direction at predetermined intervals.

Herein, the bent wall may be bent alternately connected to opposing surfaces of the battery cells, so that the cooling passage may be formed to communicate with the battery cells and at least one surface of the facing battery cells at both surfaces may come into direct contact with the cooling fluid.

In another aspect, the present disclosure provides a method for cooling a plurality of stacked battery cells by directly cooling the battery cells by allowing cooling fluid to flow through one or more cooling passage(s) of a cooling plate which is respectively formed on a stacking surface of the battery cells and which communicates with at least a portion the surface area formed by the respective battery cell.

Optionally, both surfaces of facing battery cells may come into direct contact with the cooling fluid, except for a first and a last battery cell of the battery stack.

According to an embodiment of the method, a stacking direction of the stacked battery cells may be perpendicular to the longitudinal direction of the battery cells, in particular perpendicular to the plane formed by the longitudinal and width directions of the battery cells.

According to an embodiment of the method, a major portion and more preferably essentially the whole surface area, optionally only exempting surface parts occupied or covered by other functional elements of or connections to the respective battery cell, is cooled by the fluid flow through the cooling passage(s).

According to an embodiment of the method, the one or more cooling passage(s) is (are) formed on or in the cooling plate formed on the stacking surface of a corresponding battery cell, wherein the one or more cooling passage(s) is (are) formed by:
(i) first and second cooling passages respectively coming into contact with the battery cell coupled to a first surface of the cooling plate and the adjacent battery cell coupled to a second surface of the cooling plate;
(ii) cooling passages respectively formed in a first direction and a second direction between bent portions of a fluid partition wall having a zigzag shape respectively bent in the first direction and the second direction at predetermined intervals; or
(iii) cooling passages formed by a bent wall connected to opposing surfaces of adjacent battery cells, wherein the bent is formed alternately in a first direction and a second direction at predetermined intervals.

According to an embodiment of the method, an immersion cooling module of any one of the above described embodiments is used in the method for cooling a plurality of stacked battery cells, wherein a cooling fluid flows at least partially in direct contact with the battery cells through the cooling passage. The features and advantages of the present disclosure will be more apparent from the following detailed description based on the accompanying drawings.

Further, it should be noted that the terms and words used in the specification and the claims should not be construed as being limited to ordinary meanings or dictionary definitions, and should be interpreted as having a meaning and a concept that are consistent with the technical idea of the present disclosure based on the principle that an inventor may appropriately define the concept of a term to best describe the present disclosure of the inventor.

According to the embodiment of the present disclosure, the cooling passage cooling the battery cell is configured to come into contact with the battery cell and to communicate with the battery cell, thereby improving the cooling performance of the battery cell.

Furthermore, the structural design of the cooling plate formed on the stacking surface of the battery cell enhances rigidity and structural safety of a battery cell module, thereby increasing degrees of freedom and reliability in device design.

Furthermore, cooling performance is maximized by directly cooling the battery cells, which efficiently increases the operational performance and efficiency of devices that use the battery cells, thereby reducing carbon dioxide emissions.

### BRIEF DESCRIPTION OF THE DRAWINGS

FIG. 1 is a perspective view of an immersion cooling module according to a first embodiment of the present disclosure.
FIG. 2 is a front view of FIG. 1.
FIG. 3 is a sectional view of FIG. 1.
FIG. 4 is a perspective view of a cooling plate according to the first embodiment of the present disclosure.
FIG. 5 is a perspective view of the immersion cooling module according to a modified example of the first embodiment of the present disclosure.
FIG. 6 is a front view of FIG. 5.
FIG. 7 is a sectional view of FIG. 5.
FIG. 8 is a perspective view of the cooling plate according to a modified example of the first embodiment of the present disclosure.
FIG. 9 is a perspective view of the immersion cooling module according to a second embodiment of the present disclosure.
FIG. 10 is a front view of FIG. 9.
FIG. 11 is a sectional view of FIG. 9.
FIG. 12 is a perspective view of the cooling plate according to a modified example of the second embodiment of the present disclosure.
FIG. 13 is a perspective view of the immersion cooling module according to the modified example of the second embodiment of the present disclosure.
FIG. 14 is a front view of FIG. 13.
FIG. 15 is a sectional view of FIG. 13.
FIG. 16 is a perspective view of the cooling plate according to a modified example of the second embodiment of the present disclosure.
FIG. 17 is a perspective view of the immersion cooling module according to a third embodiment of the present disclosure.
FIG. 18 is a front view of FIG. 17.
FIG. 19 is a sectional view of FIG. 17.
FIG. 20 is a perspective view of the cooling plate according to the third embodiment of the present disclosure.
FIG. 21 is a perspective view of the immersion cooling module according to a fourth embodiment of the present disclosure.
FIG. 22 is a front view of FIG. 21.
FIG. 23 is a sectional view of FIG. 21.
FIG. 24 is a perspective view of the cooling plate according to the fourth embodiment of the present disclosure.

### DETAILED DESCRIPTION OF THE DISCLOSURE

The terminology used to describe embodiments of the present disclosure is not intended to limit the present disclosure. It should be noted that expressions in singular may include expressions in plural unless the context clearly indicates otherwise.

In assigning reference numerals to components of the drawings, it should be noted that the same components are given the same reference numerals as much as possible even when they are shown in different drawings, and similar reference numerals are given to similar components.

The drawings may be schematic or exaggerated to illustrate embodiments. In the present document, expressions such as "has", "may have", "comprises", "may comprise", "includes", or "may include" indicate the presence of corresponding characteristics (e.g., a numerical value, function, operation, or component such as a part), and does not exclude the presence of additional characteristics.

Terms such as "one", "other", "another", "first", "second", etc. are used to distinguish one component from another, and components are not limited by the above terms.

It will be understood that when a component is described as being "connected," "combined" or "coupled" to another component, the component may be directly connected or coupled to the another component, but it may be "connected," "combined" or "coupled" to the another component by an intervening another component that may be present.

Further, in describing the components of the embodiment or aspect, the meaning of "or" may mean each of the components, may mean two or more of the components, or may mean all of the components. For example, it should be understood that the expressions "a, b or c" represent any one of "a," "b," "c," "a and b," "a and c," "b and c," and "a, b and c."

As used herein, any directional terms as the terms "upper", "lower", "height", "side", or the like are used with reference to the respective directions or positions indicated by reference or shown in the drawings for representing a direction or positional relationship in the given context. Specifically, the terms "upper", "lower", or the like refer to a height direction with reference to the drawings.

Further, any directional terms as the term "longitudinal direction" are used with reference to the respective directions indicated by reference or shown in the drawings for representing a direction relationship in the given context. Specifically, the term "longitudinal direction" refers to a direction relating to a length or a lengthwise dimension.

Hereinbelow, an exemplary embodiment of the present disclosure will be described in detail with reference to accompanying drawings.

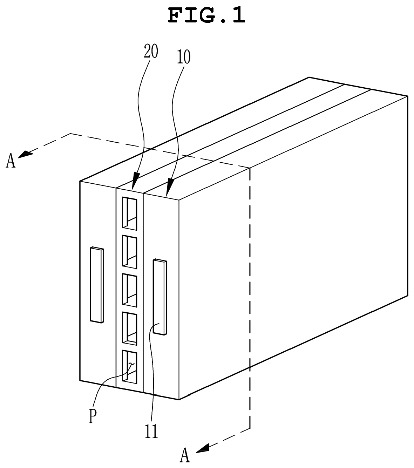

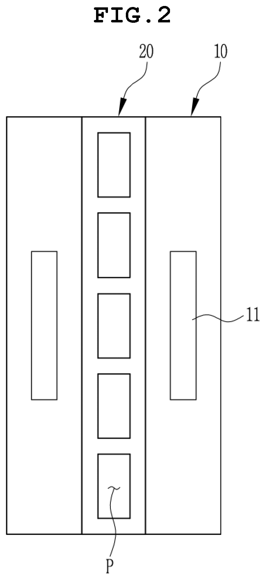

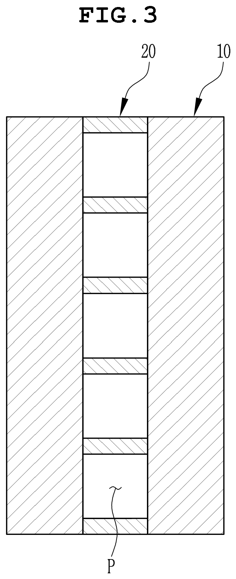

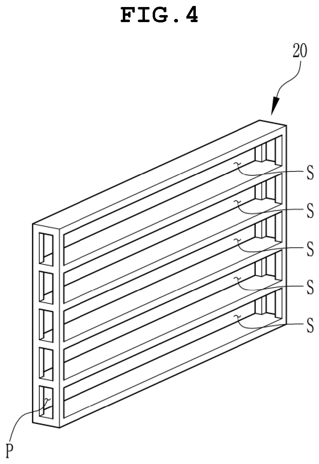

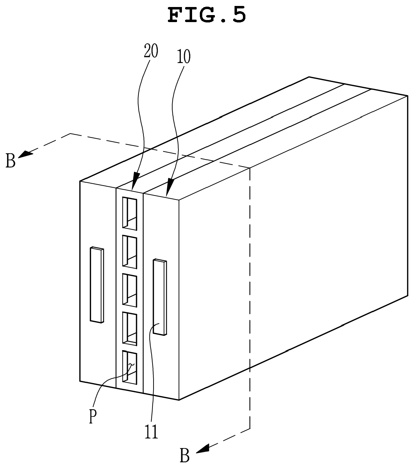

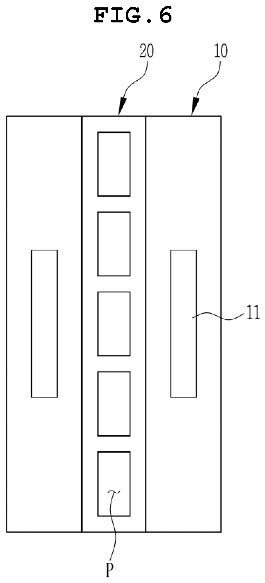

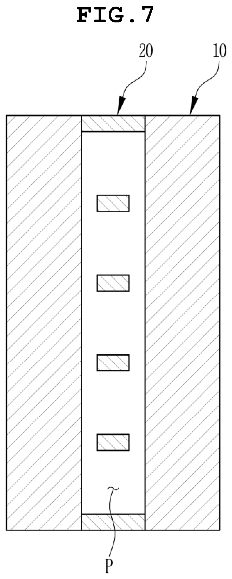

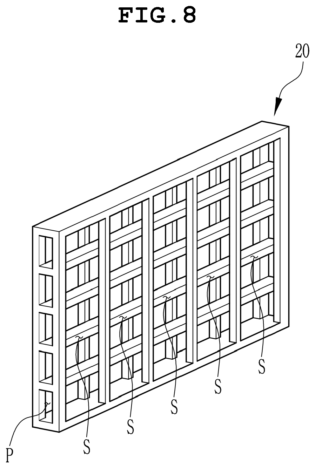

FIG. 1 is a perspective view of an immersion cooling module according to a first embodiment of the present disclosure. FIG. 2 is a front view of FIG. 1. FIG. 3 is a sectional view of FIG. 1. FIG. 4 is a perspective view of a cooling plate according to the first embodiment of the present disclosure. FIG. 5 is a perspective view of the immersion cooling module according to a modified example of the first embodiment of the present disclosure. FIG. 6 is a front view of FIG. 5. FIG. 7 is a sectional view of FIG. 5. FIG. 8 is a perspective view of the cooling plate according to a modified example of the first embodiment of the present disclosure.

According to the first embodiment of the present disclosure, the immersion cooling module includes battery cells 10 stacked on opposite surfaces thereof, and a cooling plate 20 including at least one cooling passage P formed in a longitudinal direction of the battery cells 10, and including flow holes S formed on a surface coupled to each battery cell, the flow holes communicating with the cooling passages P to allow cooling fluid flowing through the cooling passages P to flow in direct contact with the battery cells 10.

As shown in FIGS. 1 and 2, in the immersion cooling module according to the embodiment of the present disclosure, the cooling plate 20 may be coupled to a stacking surface for stacking a plurality of battery cells 10. At this point, the battery cells 10 include various shapes of secondary batteries including an electrode tab 11, and include all of prismatic, cylindrical, or pouch-type secondary batteries, and the present disclosure does not limit the shape of the battery cells 10. However, in response to the types and shapes of secondary batteries, the design of the cooling plate 20 can be properly changed.

The battery cells 10 may be stacked and coupled to opposite surfaces of the cooling plate 20. The cooling plate 20 may be made of metal, and metal materials with excellent thermal conductivity, such as aluminum, and good chemical resistance in immersion cooling may be selectively used to form the cooling plate. The cooling passages P are formed in the cooling plate 20, and fluid flowing in the cooling passages P may cool the battery cells 10 coupled to the opposite surfaces of the cooling plate.

As shown in FIG. 3, the cooling passages P of the cooling plate 20 may be designed to communicate directly with the battery cells 10 coupled to opposite surfaces of the cooling plate.

As shown in FIG. 4, the flow holes S may be formed on each of opposite surfaces of the cooling plate 20 so that the cooling passages P in the cooling plate 20 communicates with a surface of each battery cell 10.

At this point, the flow holes S of the cooling plate 20 are formed to extend in the longitudinal direction of the cooling passages P, and communicate with the cooling passages P to allow the cooling fluid to cool directly a surface of each battery cell 10. The number or size of flow holes S is not limited, but the proper structure design of the flow holes S communicating with the cooling passages P may be changed in response to the location or size of the cooling passages P.

As shown in FIG. 4, the flow holes S are formed in the longitudinal direction, i.e., a formation direction of the cooling passage P, thereby facilitating the flow of the cooling fluid and simultaneously efficiently inducing direct contact between the cooling fluid and the surface of each battery cell 10.

In a modified example of the first embodiment of the present disclosure, the shape and structure of the flow holes S on the opposite surfaces of the cooling plate 20 may be changed.

As shown in FIGS. 5 and 6, a perspective view and a front view of the immersion cooling module according to the modified example of the first embodiment of the present disclosure are the same as those in FIGS. 1 and 2 of the first embodiment of the present disclosure. However, as the modified example of the first embodiment of the present disclosure, as shown in FIGS. 7 and 8, at least one flow hole S of the cooling plate 20 may be formed in a direction crossing the longitudinal direction of the formation of the cooling passages P. In this case, the thickness of a frame of the cooling plate formed in the direction crossing to the cooling passages P is adjusted, thereby adjusting the flow rate of the cooling fluid on the contact surface of each battery cell 10. In other words, when the thickness of the frame in the direction crossing the flow direction of the fluid increases, the velocity of the cooling fluid in contact with the surface of each battery cell 10 may be reduced due to fine disruptions in the flow of the cooling fluid. Accordingly, it is possible to prevent abrasion or damage to the battery cells due to contact between the cooling fluid and the surfaces of the battery cells.

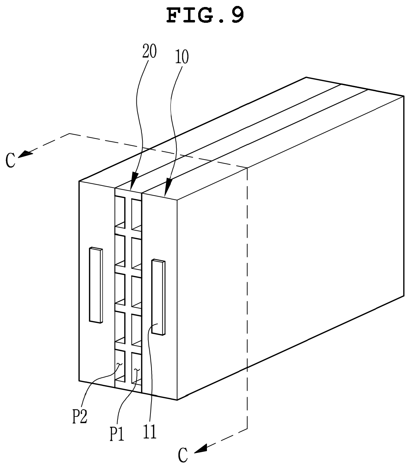

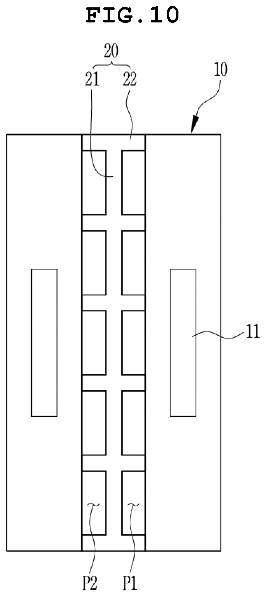

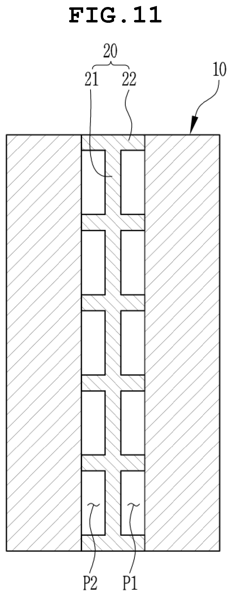

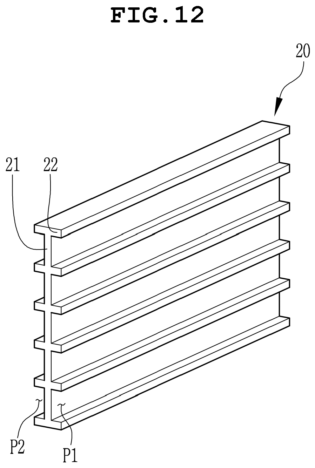

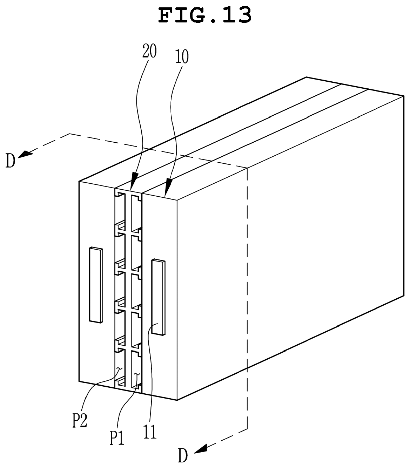

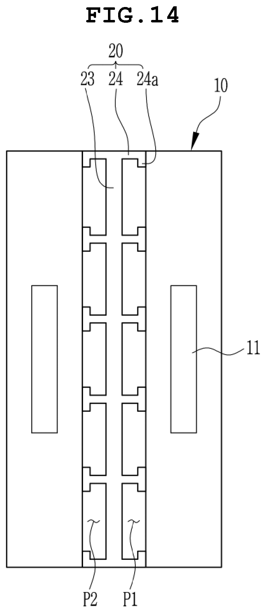

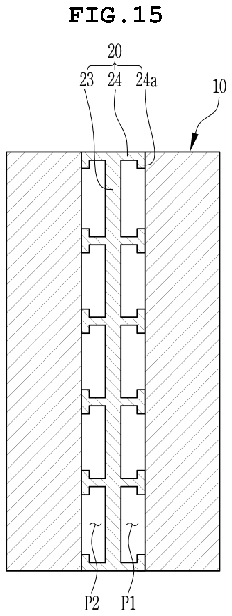

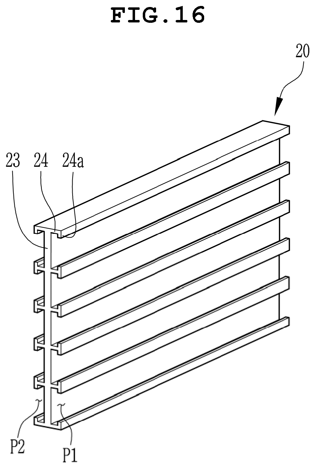

FIG. 9 is a perspective view of the immersion cooling module according to a second embodiment of the present disclosure. FIG. 10 is a front view of FIG. 9. FIG. 11 is a sectional view of FIG. 9. FIG. 12 is a perspective view of the cooling plate according to a modified example of the second embodiment of the present disclosure. FIG. 13 is a perspective view of the immersion cooling module according to a modified example of the second embodiment of the present disclosure. FIG. 14 is a front view of FIG. 13. FIG. 15 is a sectional view of FIG. 13. FIG. 16 is a perspective view of the cooling plate according to the modified example of the second embodiment of the present disclosure.

According to the second embodiment of the present disclosure, the immersion cooling module may be configured to physically divide the cooling passages P of the cooling plate into a first cooling passages P1 in which the cooling fluid flows while coming into contact with the battery cell at the first surface of the cooling plate, and a second cooling passages P2 coming into contact with the battery cell coupled to a second surface of the cooling plate, by a vertical partition wall. In other words, unlike the first embodiment of the present disclosure, the cooling passages P may include the first cooling passages P1 and the second cooling passages P2 physically divided.

Specifically, as shown in FIG. 9, the battery cells 10 may be stacked and coupled to opposite surfaces of the cooling plate 20.

As shown in FIGS. 10 and 11, when viewed from the front side of the cooling plate 20, a vertical partition wall 21 at a central portion of the cooling plate 20 may physically divide the first cooling passages P1 and the second cooling passages P2.

The first cooling passages P1 may be provided such that the cooling fluid comes into direct contact with a surface of the battery cell 10 coupled to the first surface of the cooling plate 20, and the second cooling passages P2 may be provided such that the cooling fluid comes into direct contact with a surface of the battery cell 10 coupled to the second surface of the cooling plate 20. As described above, the first cooling passages P1 and the second cooling passages P2 are physically divided from each other, allowing the cooling fluid to communicate with each surface of the battery cells 10, thereby implementing direct cooling via direct contact between the battery cells 10 and the cooling fluid.

In other words, as shown in FIG. 12, the first cooling passages P1 and the second cooling passages P2 are formed to be open at the first surface and the second surface, respectively, of the cooling plate 20, so that open side portions of the first cooling passages P1 and the second cooling passages P2 may serve as the flow holes S.

Furthermore, as described in the first embodiment of the present disclosure, on the first surface and the second surface of the cooling plate, separate flow holes S may be formed on regions where the first cooling passages P1 and the second cooling passages P2 come into direct contact with surfaces of the battery cells 10.

As shown in FIG. 12, according to the second embodiment of the present disclosure, the cooling plate 20 includes a plurality of first cooling passages P1 and a plurality of second cooling passages P2 divided by the vertical partition wall 21 located at the central portion and dividing the cooling passage P, and divided by horizontal partition walls 22 arranged to cross the vertical partition wall 21 and extending from both sides of the vertical partition wall 21.

The horizontal partition walls 22 are arranged to be spaced apart from each other at predetermined intervals in a vertical direction when viewed from a front side of the vertical partition wall 21, and opposite ends of each of the horizontal partition walls 22 may be coupled to the battery cell 10 at the first surface and the other battery cell 10 at the second surface.

Opposite-directional spacings of the vertical partition wall 21 are adjusted along the horizontal partition walls 22, thereby adjusting relative widths of the first cooling passages P1 and the second cooling passages P2 that come into contact with the battery cells 10 at the opposite surfaces.

In other words, not shown in FIG. 12, the horizontal partition walls 22 are coupled to the vertical partition wall 21 so that the vertical partition wall 21 is movable in the opposite directions of the horizontal partition walls 22. The vertical partition wall 21 is moved in the opposite directions of the horizontal partition walls 22 to adjust the relative sizes of the first cooling passages P1 and the second cooling passages P2, thereby adjusting the cooling degree of the battery cells 10 at the opposite surfaces.

The coupling method for adjustment as described above may use a known physical coupling method, although not shown in the drawings, the coupling method may use an insertion-coupling method in which coupling portions of the vertical partition wall and the horizontal partition walls are physically movable relative to each other.

FIGS. 13 to 16 are views showing the immersion cooling module according to a modified example of the second embodiment of the present disclosure.

FIG. 13 relates to the modified example of the second embodiment of the present disclosure, and opposite ends of the horizontal partition walls 24 of the cooling plate 20 may include flanges 24a coming into contact with a surface of a respective battery cell 10.

As shown in FIGS. 14 and 15, the flanges 24a formed at the opposite ends of the horizontal partition walls 24 may be configured to come into contact with surfaces of the battery cells 10 at wider widths, so that the cooling plate 20 may be stably coupled to the stacking surfaces of the battery cells 10. Furthermore, as the cooling plate 20 ensures stable coupling and space with respect to the battery cells at the opposite surfaces, a flow of the cooling fluid through the cooling passage P of the cooling plate 20 may be maintained stably.

As shown in FIG. 16, the cooling plate 20 may secure structural rigidity due to coupling between the battery cells 10, as the flanges 24a are formed on opposite ends of each of the horizontal partition walls 24. Similar to the second embodiment described above, the vertical partition wall 23 is coupled to the horizontal partition walls 24 such that it is movable in both directions.

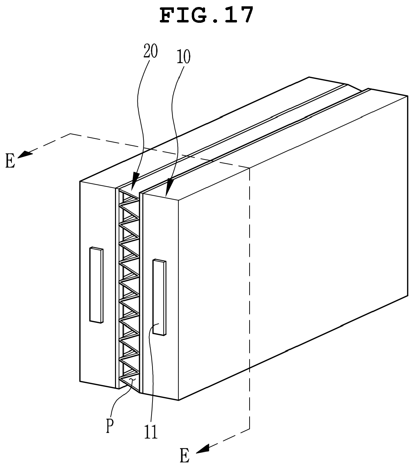

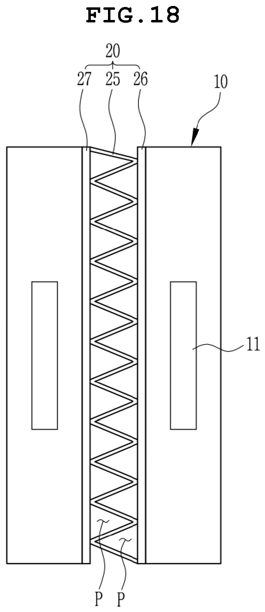

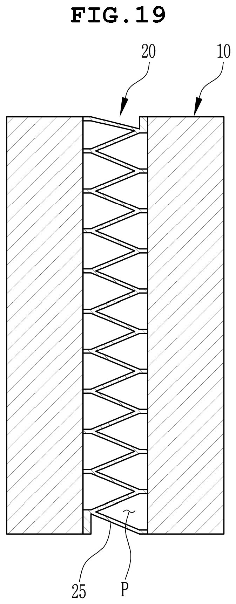

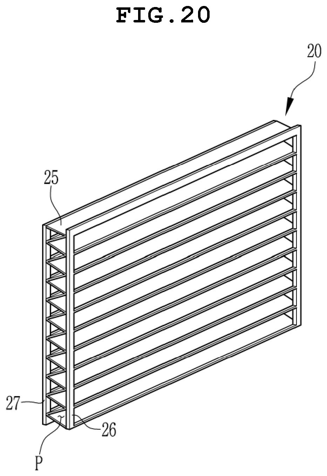

FIG. 17 is a perspective view of the immersion cooling module according to a third embodiment of the present disclosure, FIG. 18 is a front view of FIG. 17, FIG. 19 is a sectional view of FIG. 17, and FIG. 20 is a perspective view showing the cooling plate according to the third embodiment of the present disclosure.

According to the third embodiment of the present disclosure, the immersion cooling module includes the battery cells 10 stacked on opposite surfaces, and the cooling plate 20 bent in a zigzag shape in a first direction and a second direction at predetermined intervals between the battery cells 10. Cooling passage P formed between the portions bent in the first and second directions.

As shown in FIG. 17, the battery cells 10 are coupled to opposite surfaces of the cooling plate 20, and cooling plate 20 forms cooling passages P by the zigzag-bent fluid partition wall 25 between the battery cells 10.

As shown in FIGS. 18 and 19, the fluid partition wall 25 is formed in a zigzag shape, and the cooling passage P may communicate with the battery cells 10 so that the cooling fluid and the surfaces of the battery cells 10 come into contact with each other through open regions in the first direction and the second direction. As the degree to which the fluid partition wall 25 may be adjusted, the number of the cooling passages P or the amount of a fluid flowing in the cooling passages P may be properly adjusted.

As shown in FIG. 20, the fluid partition wall 25 may include a first frame 26 and a second frame 27 securely coupled to portions bent in the first direction and the second direction. In this case, the first frame 26 and the second frame 27 are coupled to the fluid partition wall 25 at the first side and the second side of the fluid partition wall 25 to fix the shape of the fluid partition wall 25. Furthermore, except for the portions where the first frame 26 and the second frame 27 are coupled to the fluid partition wall 25, opposite side portions of the cooling plate 20 are open to communicate with the cooling passages P of the fluid partition wall 25, so that the cooling fluid comes into direct contact with a respective surface of the battery cells 10, thereby increasing cooling efficiency.

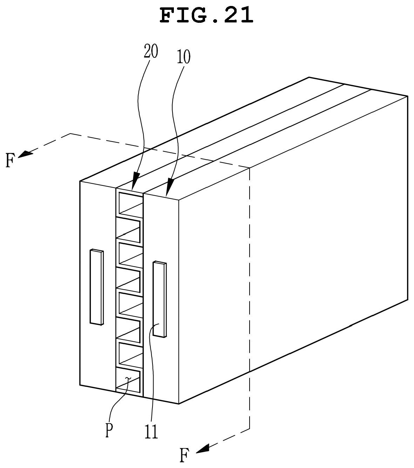

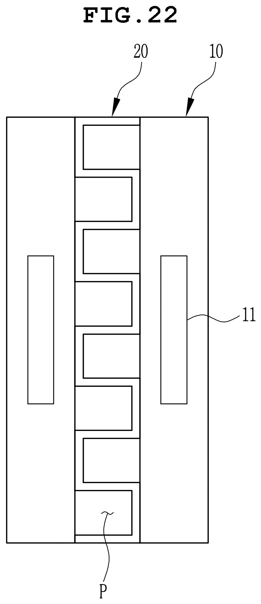

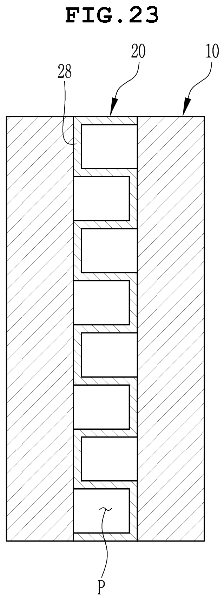

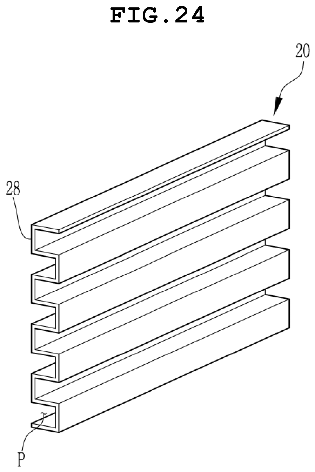

FIG. 21 is a perspective view of the immersion cooling module according to a fourth embodiment of the present disclosure. FIG. 22 is a front view of FIG. 21. FIG. 23 is a sectional view of FIG. 21. FIG. 24 is a perspective view of the cooling plate according to the fourth embodiment of the present disclosure.

According to the fourth embodiment of the present disclosure, the immersion cooling module includes the battery cells 10 stacked on the opposite surfaces, and a bent wall 28 located between the opposite battery cells 10 and bent perpendicularly alternately in a first direction and a second direction at predetermined intervals.

As shown in FIG. 21, the battery cells 10 are coupled and stacked on the opposite surfaces. As shown in FIG. 22, the bent wall 28 is bent alternately in both directions, and bent perpendicular to form the cooling passages P.

As shown in FIGS. 22 and 23, the bent wall 28 may form the cooling passage P successively while forming a space between the battery cells 10 at the opposite side surfaces. According to the fourth embodiment of the present disclosure, when the bent wall 28 of the cooling plate 20 is bent in one direction, the bent wall may come into contact with the surfaces of the battery cells 10 at a predetermined length. As shown in the drawings, the bent wall 28 is coupled to be bent perpendicularly alternately in facing directions of the battery cells 10 formed on the opposite surfaces of the cooling plate 20, so that the cooling passages P may communicate with the battery cell to allow at least one surface of the facing battery cells 10 and the cooling fluid to come into direct contact with each other.

In the method for cooling a plurality of stacked battery cells the present disclosure, all the battery cells 10 of the cell stack are directly cooled by allowing cooling fluid to flow through one or more cooling passage(s) (P) of the cooling plate 20 which is respectively formed on a stacking surface of the battery cells 10 and which communicates with at least a portion the surface area formed by the respective battery cell. Thereby, it is possible that both surfaces of facing battery cells 10 may come into direct contact with the cooling fluid. The first and the last battery cell of the battery stack may have contact at one of both respectively surfaces.

In the method, a major portion and more preferably essentially the whole surface area, optionally only exempting surface parts occupied or covered by other functional elements of or connections to the respective battery cell, is cooled by the fluid flow through the cooling passage(s). The one or more cooling passage(s) may be formed on or in the cooling plate formed on the stacking surface of a corresponding battery cell, wherein the one or more cooling passage(s) is (are) formed by (i) first and second cooling passages respectively coming into contact with the battery cell coupled to a first surface of the cooling plate and the adjacent battery cell coupled to a second surface of the cooling plate; (ii) cooling passages respectively formed in a first direction and a second direction between bent portions of a fluid partition wall having a zigzag shape respectively bent in the first direction and the second direction at predetermined intervals; or (iii) cooling passages formed by a bent wall connected to opposing surfaces of adjacent battery cells, wherein the bent is formed alternately in a first direction and a second direction at predetermined intervals.

The method may make use of, or combined with, the immersion cooling module of any one of the above described embodiments.

The immersion cooling module and the method for cooling the plurality of stacked battery cells as disclosed herein combines increased structural stability with enhanced or maximized cooling efficiency.

Hereinabove, the present disclosure has been described in detail through specific embodiments. The embodiments are provided to specifically describe the present disclosure, but the present disclosure is not limited thereto.

## Claims

1. An immersion cooling module comprising:
battery cells (10) stacked on opposite surfaces thereof;
one or more cooling passages (P) formed in a longitudinal direction of the battery cells (10); and
a cooling plate (20) in which flow holes (S) communicating with the cooling passages (P) are formed on coupling surfaces contacting the battery cells (10) to allow cooling fluid flowing through the cooling passages (P) to flow while in direct contact with the battery cells (10).

2. The immersion cooling module of claim 1, wherein the flow holes (S) of the cooling plate (20) are formed to extend in a longitudinal direction of the cooling passages (P) and to communicate with the cooling passages (P).

3. The immersion cooling module of claim 1 or 2, wherein the flow holes (S) of the cooling plate (20) are formed to extend in a direction crossing the cooling passages (P) and to communicate with the cooling passages (P).

4. The immersion cooling module of any one of claims 1 to 3, wherein the cooling passages (P) of the cooling plate (20) comprise:
a first cooling passage (P1) coming into contact with the battery cell (10) coupled to a first surface of the cooling plate (20); and
a second cooling passage (P2) physically separated from the first cooling passage (P1) by a vertical partition wall (21, 23) and coming into contact with the battery cell (10) coupled to a second surface of the cooling plate (20).

5. The immersion cooling module of claim 4, wherein the first cooling passage (P1) and the second cooling passage (P2) are partitioned into a plurality of first cooling passages (P1) and a plurality of second cooling passages (P2) by horizontal partition walls (22; 24) crossing the vertical partition wall (21; 23).

6. The immersion cooling module of claim 5, wherein the horizontal partition walls (22; 24) are formed to be spaced from each other at predetermined intervals in a longitudinal direction of the vertical partition wall (21; 23), and opposite ends of each horizontal partition wall (21; 23) are coupled to directly contact the battery cell at the first surface and the battery cell at the second surface.

7. The immersion cooling module of claim 5 or 6, wherein each of the horizontal partition walls (24) includes flanges (24a) at both ends, each flange (24) coming into contact with a surface of the corresponding each battery cell (10).

8. An immersion cooling module comprising:
battery cells (10) stacked on opposite surfaces of a cooling plate (20);
the cooling plate (20) provided between the opposite battery cells (10) and comprising a fluid partition wall (25) having a zigzag shape bent in a first direction and a second direction at predetermined intervals, and forming a cooling passage (P) between the bent portions in the first direction and the second direction.

9. The immersion cooling module of claim 8, wherein the fluid partition wall (25) of the cooling plate (20) comprises:
a first frame (26) and a second frame (27) coupled to opposite portions thereof,
wherein the first frame (26) and the second frame (27) are coupled to a first portion and a second portion of the zigzag shape of the fluid partition wall (25), and are open at the first portion and the second portion to communicate with a cooling passage (P) formed by the fluid partition wall (25).

10. An immersion cooling module comprising:
battery cells (10) stacked on opposite surfaces; and
a cooling plate (20) provided between the opposite battery cells (10) and comprising a bent wall (28) that is bent perpendicularly alternately in a first direction and a second direction at predetermined intervals.

11. The immersion cooling module of claim 10, wherein the bent wall (28) is bent alternately connected to opposing surfaces of adjacent battery cells (10), whereby the cooling passage (P) is formed to communicate with the battery cells (10) so that at least one surface of the facing battery cells (10) at both surfaces comes into direct contact with the cooling fluid.

12. A method for cooling a plurality of stacked battery cells (10) by directly cooling the battery cells (10) by allowing cooling fluid to flow through one or more cooling passage(s) (P) of a cooling plate (20) which is respectively formed on a stacking surface of each battery cell (10) and which communicate with at least a portion of the surface area formed by the respective battery cell (10),
optionally wherein both surfaces of facing battery cells (10) come into direct contact with the cooling fluid, except for a first and a last battery cell of the battery stack.

13. The method for cooling a plurality of stacked battery cells (10) according to claim 12, wherein a stacking direction of the stacked battery cells is perpendicular to the longitudinal direction of the battery cells, in particular is perpendicular to the plane formed by the longitudinal and width directions of the battery cells,
optionally wherein a major portion, preferably essentially the whole surface area exempting only surface parts occupied or covered by other functional elements of or connections to the respective battery cells (10), is cooled by the fluid flow through the cooling passage(s) (P).

14. The method for cooling a plurality of stacked battery cells (10) according to claim 12 or 13, wherein one or more cooling passage(s) (P) is (are) formed on or in the cooling plate (20) formed on the stacking surface of a corresponding battery cell (10), wherein the one or more cooling passage(s) (P) is (are) formed by:
(i) first and second cooling passages (P1, P2) respectively coming into contact with the battery cell (10) coupled to a first surface of the cooling plate (20) and the adjacent battery cell (10) coupled to a second surface of the cooling plate (20);
(ii) cooling passages (P) respectively formed in a first direction and a second direction between bent portions of a fluid partition wall (25) having a zigzag shape respectively bent in the first direction and the second direction at predetermined intervals; or
(iii) cooling passages (P) formed by a bent wall (28) connected to opposing surfaces of adjacent battery cells (10), wherein the bent is formed alternately in a first direction and a second direction at predetermined intervals

15. The method for cooling a plurality of stacked battery cells (10) according to any one of claims 12 to 14, wherein an immersion cooling module of any one of the claims 1 to 11 is used, wherein a cooling fluid flows at least partially in direct contact with the battery cells (10) through the cooling passage (P).
